# EUROPEAN PATENT SPECIFICATION

(11) **EP 2 442 096 B1**
(45) Date of publication and mention of the grant of the patent: **22.05.2013**
(21) Application number: 11184867.7
(22) Date of filing: 12.10.2011
(51) Int. Cl.: G01N 22/00, G01N 21/35

(54) **Determination of electromagnetic properties of samples**
Bestimmung elektromagnetischer Eigenschaften von Proben
Détermination des propriétés électromagnétiques d'échantillons

(30) Priority: 13.10.2010 US 392725 P
(43) Date of publication of application: 18.04.2012
(73) Proprietor: IMEC, 3001 Leuven (BE); Katholieke Universiteit Leuven, K.U. Leuven R&D, 3000 Leuven (BE)
(72) Inventor: Enayati, Amin, 3001 Leuven (BE); Brebels, Steven, 3940 Hechtel-Eksel (BE); De Raedt, Walter, 2547 Lint (BE); Vandenbosch, Guy, 2830 Heindonk (Willebroek) (BE)
(74) Representative: Mackett, Margaret Dawn

(56) References cited:
- US-A1- 2004 095 147

## Description

### Field of the Invention

The present invention relates to the determination of electromagnetic properties of samples, and is more particularly concerned with a system and method for determining such properties of small samples.

### Background to the Invention

Extraction of electromagnetic properties of materials has been performed in many forms of testing including non-destructive testing as described in US-A-5574379. In US-A-5574379, a system of measuring the electromagnetic properties of a component is described where electromagnetic energy, for example, microwave energy, is directed towards the component being tested and the reflected energy is analysed to indicate the resistivity or magnetic susceptibility of the component.

In addition, several techniques are available for characterising materials at millimetre and sub-millimetre frequencies.

US-A-4507602 describes a system for measuring the properties of a sample. The sample is positioned between two sectoral horns that are placed mouth-to-mouth with the sample therebetween. An input signal in the Ku band (12.4 to 18GHz) is supplied to the sample via one horn and the transmitted and reflected signals from the sample are received at respective horns. The transmitted and reflected signals are analysed to determine the complex permittivity and permeability of the sample.

It is also known to perform permittivity measurements on printed wiring, circuit boards, thin films and other substrates in order to measure their integrity. This is described by J B Jarvis and C A Jones in "Dielectric Measurements on Printed Wiring and Circuit Boards, Thin Films and Substrates: An Overview", Mat. Res. Soc. Sympo. Proc., Vol. 381, 1995.

Fabry-Perot resonators are also known for measuring the electromagnetic properties of samples using microwaves as described in "Fabry-Perot and Open Resonators at Microwave and Millimetre Wave Frequencies, 2-300GTHz", J. Phys. E: Sci. Instrum., Vol. 15, 1982. Properties that can be measured include dielectric constant, anisotropy, and magnetic resonance.

The measurement of dielectric constant is also described in "Determination of the Complex Permittivity of Packaging Materials at Millimeter-Wave Frequencies" by T Zwick et al., IEEE Trans. Microw. Theory Tech., Vol. 54, no. 3, 2006. Frequencies from below 20 to 100GHz are used for performing measurements on thin sheet substrate materials.

Corrugated horn antennas can be used with elliptical surfaces for measuring laminar samples as described by J Krupka in "Frequency Domain Complex Permittivity Measurements at Microwave Frequencies", Meas. Sci. Technol., Vol. 17, pages 55 to 70, 2006.

In the articles described above, the methods require a three-dimensional measurement to be made of the small sample and correct alignment of the sample in three dimensions is required to have good measurement results.

In US-A-5455516, a method and apparatus for the measurement of moisture in a material is described. Microwave energy is coupled to a measurement chamber via a coaxial transmission line over a multi-octave bandwidth via an intermediate microstrip-to-slotline coupling circuit.

US-A-2004/095147 discloses a probe which utilises a chamber having ellipsoid surfaces to direct THz radiation from a generator to an end of the probe and to direct reflected radiation from the sample to a receiver, the generator, receiver and sample being located at focal points of the ellipsoid surfaces.

However, most of these methods or techniques use samples with large dimensions and tend to be unsuitable for measuring the electromagnetic properties of small samples. In addition, the sample needs to be correctly positioned within a three-dimensional space so that misalignment aberrations do not have an impact on the accuracy of the measurement.

Moreover, known methods and apparatus tend to be over-complicated for measuring small samples, particularly synthesised materials, such as carbon nanotubes and graphene, where the size of the samples is limited.

### Summary of the Invention

It is therefore an object of the present invention to provide an improved and simplified apparatus and associated method for measuring the electromagnetic characteristics of small samples.

It is a further object of the present invention to provide apparatus and method for measuring any material parameter that can be determined from measuring the electromagnetic properties of the material.

It is another object of the present invention to provide a device and/or method where electromagnetic measurements can be made at millimetre and sub-millimetre wave frequencies for samples with dimensions typically in the range of a few millimetres by a few millimetres or smaller.

It is also an object of the present invention to provide a device that overcomes the problem of misalignment aberrations present in conventional three-dimensional measurement methods.

In accordance with a first aspect of the present invention, there is provided a measurement device for measuring electromagnetic characteristics of a sample of at least a sub-millimetre size using electromagnetic radiation having a frequency in one of the millimetre and sub-millimetre wave frequencies, the measurement device comprising:-
a measurement chamber;
at least one input/output provided in the measurement chamber for introducing electromagnetic radiation into the measurement chamber;
at least one reflective surface provided within the measurement chamber for directing the introduced electromagnetic radiation towards the sample holder and for directing at least reflected electromagnetic radiation from the sample, each reflective surface comprises a partly conic shape having at least two focal points, each input/output port and the sample holder is located at one of the focal points; and
a controller for controlling the introduced electromagnetic radiation and for measuring electromagnetic radiation that is at least reflected from the sample;
characterised in that the measurement device further comprises a sample holder for holding the sample, the sample holder being mounted in the measurement chamber; and in that the measurement chamber is substantially two-dimensional.

By using a partly conic shape for the reflective surface, the focal points can be used for positioning the sample holder, and hence, the sample to be tested as well as the input/output ports. This provides an efficient transfer of electromagnetic energy to and from the sample in the sample holder.

In one embodiment, the partly conic shape comprises an ellipse and the reflective surface comprises a portion of the ellipse. Here, a single reflective surface is provided that forms the portion of an ellipse, the reflective surface having first and second focal points with one input/output port located at the first focal point and the sample holder at the second focal point.

Preferably, the input/output port includes an antenna for directing the electromagnetic energy onto the sample holder via the reflective surface and for receiving reflected electromagnetic energy from the sample holder via the reflective surface. Alternatively or in addition, each input/output port includes a respective antenna for directing the electromagnetic energy onto the sample holder via the reflective surface and for receiving transmitted electromagnetic energy from the sample holder via the reflective surface.

In another embodiment, two reflective surfaces are provided, each reflective surface forming the portion of an ellipse and having respective first and second focal points, and wherein the second focal point of one ellipse is coincident with the second focal point of the other ellipse, the sample holder being located at the coincident focal point with the input/output ports being located at respective ones of the first focal points.

Each input/output port may include a respective antenna for directing the electromagnetic energy onto the sample holder via the reflective surface and for receiving reflected electromagnetic energy from the sample holder via the reflective surface.

Preferably, at least one of the input/output ports directs electromagnetic energy into the measurement chamber. It will be appreciated that in some embodiments, both input/output ports may be required to direct energy into the measurement chamber either sequentially or simultaneously. In addition, each input/output port may direct electromagnetic energy at different frequencies.

In addition, at least one of the input/output ports may receive reflected electromagnetic energy from the sample holder. Similarly, at least one of the input/output ports may receive transmitted electromagnetic energy from the sample holder.

It will be appreciated that, in one embodiment, at least one of the input/output ports may direct electromagnetic energy into the measurement chamber and/or receive reflected and/or transmitted electromagnetic energy from the sample holder.

In some embodiments, each input/output port may comprise a waveguide.

Walls of the measurement chamber may be covered with electromagnetic absorbing material to prevent reflected electromagnetic radiation from these walls interfering with electromagnetic radiation reflected and/or transmitted from the sample.

### Brief Description of the Drawings

For a better understanding of the present invention, reference will now be made, by way of example only, to the accompanying drawings in which:-
Figure 1 is a schematic plan view of a measurement device in accordance with one embodiment of the present invention;
Figure 2 is a schematic plan view of a measurement device in accordance with a second embodiment of the present invention;
Figure 3 illustrates a radiation field distribution in the device shown in Figure 2;
Figure 4 is a perspective view of the measurement device shown in Figure 2;
Figure 5 is a schematic illustration of a measurement device in accordance with a third embodiment of the present invention;
Figure 6 illustrates a radiation field distribution in the device shown in Figure 5; and
Figure 7 illustrates a graph of insertion and return losses against frequency for a measurement device in accordance with the present invention.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

It will be understood that the terms "vertical" and "horizontal" are used herein refer to particular orientations of the Figures and these terms are not limitations to the specific embodiments described herein.

The terms "first", "second", "third" and the like are used in the description for distinguishing between similar elements and not necessarily for describing a sequential or chronological order. It will be appreciated that the terms are interchangeable under appropriate circumstances and that the embodiments of the invention can operate in other sequences than described or illustrated herein if necessary.

In accordance with the present invention, the particular characteristics to be determined in relation to a sample are electromagnetic permittivity and the magnetic permeability of the material. However, it will be appreciated that other characteristics may also be determined.

The present invention will be described with reference to samples made from carbon nanotubes and graphene. Graphene is an allotrope of carbon whose structure is one atom thick planar sheets of bonded carbon atoms densely packed in a honeycomb crystal lattice. The crystalline or "flake" form of graphite consists of many graphene sheets stacked together.

Carbon nanotubes (CNTs) are allotropes of carbon with a cylindrical nanostructure which have unusual properties. Their name is derived from their long hollow structure with walls formed by one atom thick sheets of carbon called graphene. The sheets of graphene are rolled at specific and discrete chiral angles to form the CNT, the combination of the rolling angle and the radius of the tube determines the properties of the CNT formed. CNTs are used in many technical areas including, but not limited to, nanotechnology, electronics and optics.

In accordance with the present invention, a device for the measurement of electromagnetic characteristics of small samples of synthesised materials is described that uses a two-dimensional geometry. As a result, the device tends not to suffer from misalignment aberrations that occur in three-dimensional devices.

The present invention relates to a device for investigating or examining electromagnetic properties of small samples of material. The device comprises a material measurement chamber, at least one input port for transmitting electromagnetic signals into the measurement chamber and for receiving electromagnetic signals from the measurement chamber. Each input port may include an antenna coupled thereto and through which the electromagnetic signals are channelled for both transmission and reception.

The measurement device in accordance with the embodiments of the present invention described below uses a controllable source of electromagnetic energy having a selected frequency. The source of electromagnetic energy is coupled to a measurement chamber by means of probes, waveguides, loops, antennas, apertures or other suitable structures so as to establish an electromagnetic wave inside the measurement chamber so that the wave can interact with the sample located within the measurement chamber.

The term "electromagnetic signal" as used herein refers to the means for generating the electromagnetic wave within the measurement chamber. The term is also used to refer to the electromagnetic waves that are received for processing.

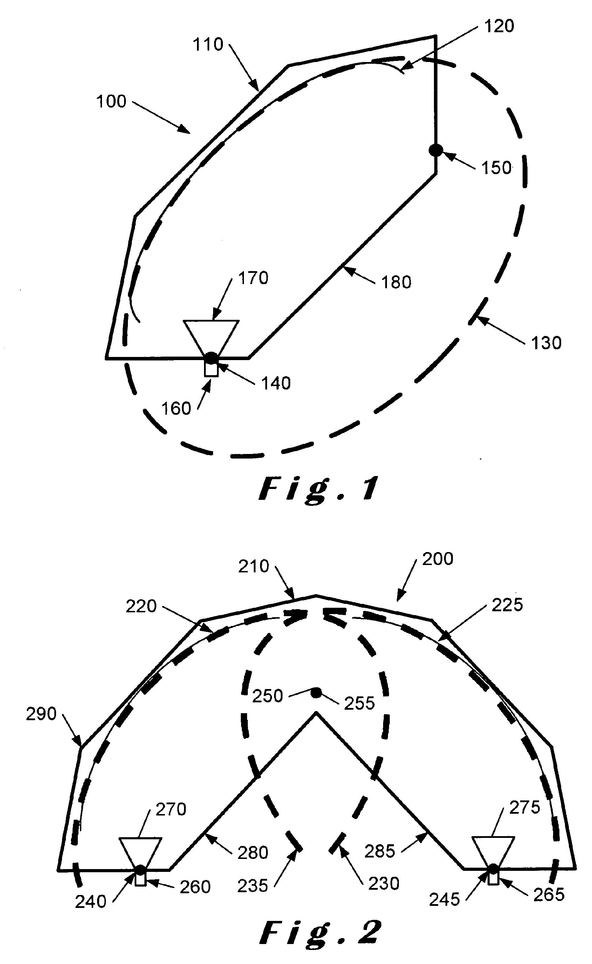

Figure 1 illustrates a first embodiment of a measurement device 100 in accordance with the present invention. The device 100 comprises a closed measurement chamber 110 that is shaped as an irregular hexagon. The measurement chamber 110 is constructed as a substantially two-dimensional device having at least one partly conic shape. In this embodiment, the conic shape is provided by a substantially elliptical surface 120 located within the measurement chamber 110. Electromagnetic signals are directed onto a sample located within the chamber 110 using the elliptical surface 120. Similarly, electromagnetic signals reflected from the sample are directed out of the measurement chamber 110 using the substantially elliptical surface 120.

The substantially elliptical surface 120 forms part of an ellipse 130 whose outline is indicated by a dotted line. The ellipse 130 is a regular ellipse having a first focal point 140 and a second focal point 150. The first and second focal points 140, 150 are used to position an input/output port 160 through which electromagnetic signals are applied to the sample and a holder for receiving a sample to be tested (not shown) respectively. The input/output port 160 includes an antenna 170 for directing the electromagnetic signals into the chamber 110 and onto the substantially elliptical surface 120 for reflection to and from the sample being tested.

Wall 180 of the measurement chamber 110 is covered by electromagnetic absorbing material (not shown) which prevents interference between radiation reflected from the walls of the measurement chamber 110 and the reflected radiation from the sample. In this way, radiation incident on the wall 180 of the measurement chamber 110 is not reflected but absorbed so that only the reflected radiation from the sample in the sample holder (not shown) is received at the input/output port 160 via the antenna 170.

An electromagnetic wave is applied to the input/output port 160 and to the antenna 170 from which the signals are transmitted through the chamber 110 and to the sample located at focal point 150 via the elliptical surface 120. Signals reflected from the sample are received by the antenna 170 via the elliptical surface 120 and passed to a processor (not shown) for processing. The processor determines the permittivity and permeability of the sample from the reflected electromagnetic signals.

The processor may comprise a network analyser and a computer that is connected to the input/output port 140 via a waveguide or a coaxial cable.

It will be appreciated that the processor may also control the generation of the electromagnetic signal that is applied to the sample via the input/output port 160, the antenna 170 and the elliptical surface 120.

A plan view of the measurement chamber 100 is shown in Figure 1, and in order to provide a substantially two-dimensional measurement, the thickness or depth of the chamber is of the order of the wavelength of the electromagnetic radiation used, typically a few millimetres at millimetre-wave frequencies.

In Figure 2, a second embodiment of a measurement device 200 in accordance with the present invention is shown. The measurement device 200 comprises a substantially two-dimensional chamber 210 constructed with a combination of two substantially elliptical surfaces 220, 225. As before, each substantially elliptical surface 220, 225 forms part of an ellipse 230, 235 as indicated by the dotted lines. Ellipse 230 has two focal points 240, 250 and ellipse 235 has two focal points 245, 255 with focal point 250 of ellipse 230 and focal point 255 of ellipse 235 overlapping, that is, they are coincident.

The measurement device 200 also includes a first input/output port 260 and a second input/output port 265. Each input/output port 260, 265 includes an antenna 270, 275 for directing electromagnetic signals onto and from respective elliptical surfaces 220, 225 within the measurement chamber 210, the input/output ports 240, 245 and the antennas 270, 275 being positioned at the non-overlapping or non-coincident focal points 240, 245 of respective ones of the ellipses 230, 235. Each input/output port 260, 265 is connected to a waveguide or coaxial cable (not shown) at the outside of the measurement device 200. In addition, a sample holder (not shown) is positioned at the overlapping focal point 250, 255.

The measurement chamber 210 is defined by walls 280, 285 and the elliptical surfaces 220, 225, the walls 280, 285 forming part of a housing 290 that is shaped to accommodate the elliptical surfaces 220, 225 as shown. The walls 280, 285 are covered with electromagnetic absorbing material (not shown) to prevent reflected radiation from these walls interfering with electromagnetic radiation reflected from and transmitted through the sample.

During sample measurement, an electromagnetic signal is provided to the first input/output port 260 where it is directed by the associated antenna 270 towards the elliptical surface 220 and to the sample being measured that is located at the overlapping focal point 250, 255. Electromagnetic signals passing through the sample are collected by elliptical surface 225 and directed to the antenna 275 associated with the second input/output port 265. Electromagnetic signals reflected from the sample are collected by elliptical surface 220 and directed to antenna 270 associated with the first input/output port 260.

Each input/output port 260, 265 is connected to a processor (not shown), which may comprise a network analyser and computer, by means of a waveguide or coaxial cable (also not shown). As before, the processor determines the permittivity and permeability of the sample from the electromagnetic signals reflected from the sample and transmitted through the sample.

It will be appreciated that, during measurement, the electromagnetic signal may alternatively be provided to the second input/output port 265 where it is directed by the associated antenna 275 towards the elliptical surface 225 and to the sample being measured that is located at the overlapping focal point 250, 255. Electromagnetic signals passing through the sample are collected by elliptical surface 220 and directed to the antenna 270 associated with the second input/output port 260. Electromagnetic signals reflected from the sample are collected by elliptical surface 225 and directed to antenna 275 associated with the first input/output port 265.

In some instances, the electromagnetic signals may be applied simultaneously, or sequentially, to both input/output ports 260, 265 and the transmitted and reflected signals processed accordingly. In this case, electromagnetic signals of different frequencies may be applied to respective ones of the first and second input/output ports 260, 265.

The sample holder containing the sample of material to be examined or measured is placed at the common focal point 250, 255. This points acts as a second energy source and radiates energy towards the antennas 270, 275. Scattering parameters (S-parameters) are continuously measured at at least one of the input/output ports 260, 265 depending on the particular configuration of the measurement device 200. In particular, the insertion loss and the return loss are measured to be less than 1 dB and 10dB respectively for the whole microwave V band, that is, between 50 and 75GHz. Insertion loss is an expression of the magnitude of the transmission coefficient |S₂₁| in dB and return loss is an expression of the magnitude of the reflection coefficient |S₁₁| in dB.

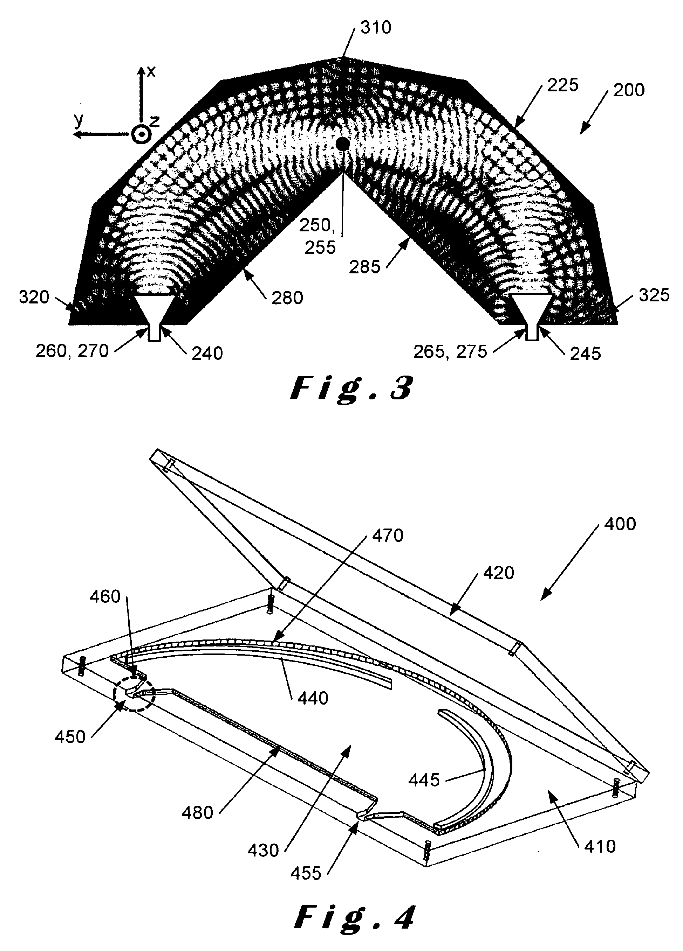

Figure 3 illustrates an electromagnetic field distribution within the measurement device 200 shown in Figure 2. Components that have previously been described with reference to Figure 2 have the same reference numerals. In Figure 3, the antennas 270, 275 comprise H-plane horn antennas that irradiate the two elliptical surfaces 220, 225. The two horn antennas are implemented in a semi-two-dimensional configuration in an x-y plane and that the radiating fields are confined in the z-direction resulting in a reduced loss due to diffraction. The fields radiated by the first horn antenna 270 are reflected in two steps before being received by the second horn antenna 275, the first reflection step being at the elliptical surface 220 and the second reflection step being at the elliptical surface 225.

The phase centres of the horn antennas 270, 275 are placed on the non-common focal points of the ellipses 230, 235 (Figure 2) resulting in the focussing of the waves radiated from each of the horn antennas 270, 275 at the common focal point 250, 255. This focussing helps the apparatus to have more sensitivity to the characteristics of the particular sample material being examined.

It can be seen that electromagnetic signals are substantially confined by the elliptical surfaces 220, 225 and the walls 280, 285 of the housing 290, with some leakage through a gap 310 between the elliptical surfaces 220, 225 and around ends 320, 325 of the elliptical surfaces 220, 225 adjacent the focal points 240, 245. As described above, the walls 280, 285 are covered with electromagnetic absorbing material and do not provide any role in the directing of the electromagnetic radiation to and from the sample.

Based on the schematic design shown in Figures 2 and 3 and full wave analysis based on a finite element technique, a measurement device 400 has been designed as shown in Figure 4. In Figure 4, a perspective view of the measurement device 400 is shown. The measurement device 400 comprises a base portion 410 and a top portion 420 that define a measurement chamber 430. The base portion 410 has dimensions of 10cm x 20cm and can be made out of, for example, aluminium, brass, or silicon with a metallised interior. The height of the measurement chamber 430 is about 2mm to provide an almost two-dimensional arrangement at the microwave V band. The top portion 420 comprises a substantially planar metallic cap sized to be the same as the dimensions of the base portion 410, that is, 10cm x 20cm.

The base portion 410 is shaped to provide a generally semicircular recess that defines the measurement chamber 430. First and second elliptical surfaces 440, 445 are provided as shown together with first and second input/output ports 450, 455. As mentioned above, the first and second input/output ports 450, 455 are located at non-common focal points of ellipses (not shown) of which the first and second elliptical surfaces 440, 445 form a part. In this embodiment, the input/output ports 450, 455 are arranged to be connected with standard waveguides, for example, WR15 waveguides 460 (only one of which is shown in Figure 4) that are suitable for use in the microwave V band in the frequency range of 50 to 75GHz. The common, overlapping or coincident focal points are not shown in this Figure.

In addition, in order to avoid unwanted resonances from the edges and interfering diffractions, absorbers 470, 480 are placed at the radiation boundaries, that is, along the substantially semicircular recess that defines the measurement chamber 430 but leaving the input/output ports 450, 455 clear. Such absorbers may comprise carbon or a graphite-based material.

The sample holder containing the sample of material to be examined or measured is placed at the common focal point (not shown) and the common focal point acts as a second energy source and radiates energy towards the input/output ports 450, 455.

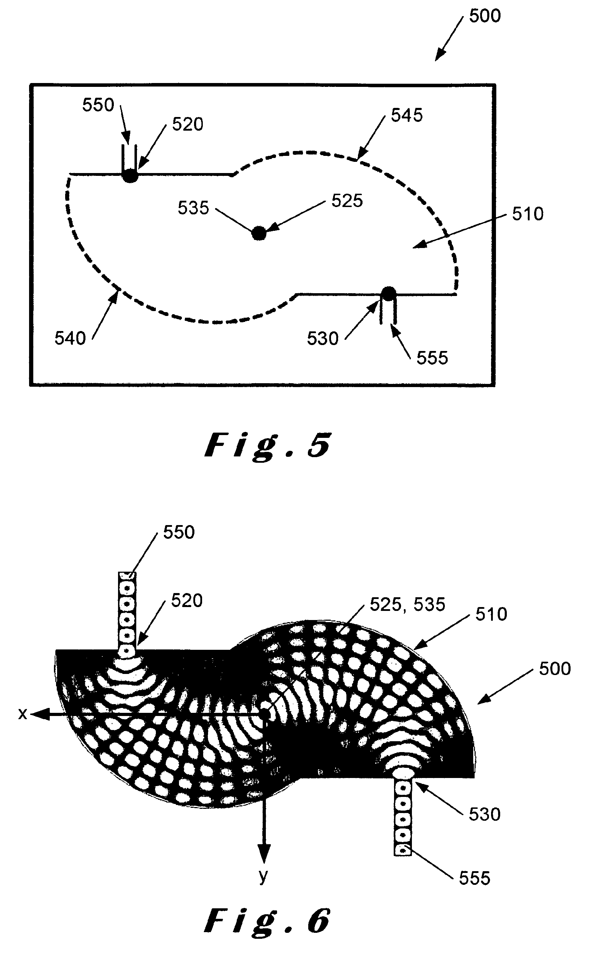

Figure 5 illustrates a schematic plan view of another embodiment of a measurement device 500 in accordance with the present invention. As before, the measurement device 500 comprises a measurement chamber 510 substantially designed as a combination of two ellipses (not shown) having first and second focal points 520, 525, 530, 535 with second focal points 525, 535 forming an overlapping focal point as shown. A portion of each ellipse forms an elliptically shaped surface 540, 545 which reflects radiation onto a sample holder (not shown) placed at the overlapping focal point 525, 535. The measurement device 500 comprises two input/output ports 550, 555 which are arranged to be connected to a waveguide or coaxial cable (not shown) at the outside of the measurement chamber 510 and to two openended waveguides (not shown) directed towards the measurement chamber 510. The two input/output ports 550, 555 are placed at the locations of the non-overlapping focal points 520, 530.

In a similar way to the measurement devices 200, 400 (Figures 2 & 4 respectively), the measurement device 500 directs energy from one input/output port 550, 555 located at non-coincident focal points 520, 530 towards a sample holder containing the sample of material to be examined or measured is placed at the common focal point 525, 535. The common, coincident or overlapping focal point 525, 535 acts as a second energy source and radiates energy towards the input/output ports 550,555.

A field distribution for the measurement device 500 is shown in Figure 6. In a similar way to field distribution shown in Figure 3, the field distribution shown in Figure 6 is bounded by the measurement chamber 510 although here it is easier to see the location of the overlapping focal points 525, 535 as indicated at 600

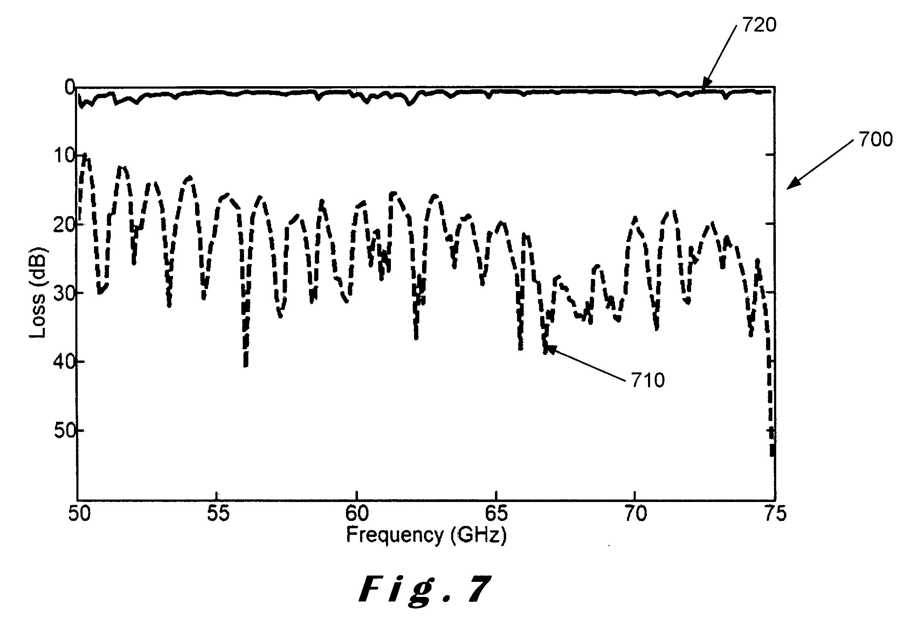

Figure 7 illustrates a graph 700 that plots the return loss and insertion loss of the device measured from the two input/output ports with respect to frequency. Return loss is indicated by dotted profile 710 and insertion loss is indicated by solid line 720. These parameters can be used to calculate the required material parameters so that return loss at least is optimised.

## Claims

1. A measurement device (100; 200; 400; 500) for measuring electromagnetic characteristics of a sample of at least a sub-millimetre size using electromagnetic radiation having a frequency in one of the millimetre and sub-millimetre wave frequencies, the measurement device comprising:-
a measurement chamber (110; 210; 430; 510);
at least one input/output port (160, 170; 260, 265, 270, 275; 550, 555) provided in the measurement chamber (110; 210; 430; 510) for introducing electromagnetic radiation into the measurement chamber (110; 210; 430; 510);
at least one reflective surface (120; 220, 225; 440, 445; 540, 545) provided within the measurement chamber (110; 210; 430; 510) for directing the introduced electromagnetic radiation towards the sample and for directing at least reflected electromagnetic radiation from the sample, each reflective surface (120; 220, 225; 440, 445; 540, 545) comprising a partly conic shape (130; 230, 235; 540, 545) having at least two focal points (140, 150; 240, 245, 250, 255; 450, 455; 520, 525, 530, 535), each input/output port (160, 170; 260, 265, 270, 275; 550, 555) and the sample is located at one of the focal points (140, 150; 240, 245, 250, 255; 450, 455; 520, 525, 530, 535); and
a controller for controlling the introduced electromagnetic radiation and for measuring electromagnetic radiation that is at least reflected from the sample;
**characterised in that** the measurement device further comprises a sample holder for holding the sample, the sample holder being mounted within the measurement chamber (110; 210; 430; 510); and **in that** the measurement chamber (110; 210; 430; 510) is substantially two-dimensional.

2. A measurement device according to claim 1, wherein the partly conic shape comprises an ellipse (130; 230, 235) and the reflective surface (120; 220, 225; 440, 445; 540, 545) comprises a portion of the ellipse (130; 230, 235).

3. A measurement device according to claim 2, wherein a single reflective surface (120) is provided that forms the portion of an ellipse (130), the reflective surface (120) having first and second focal points (140, 150) with one input/output port (160, 170) located at the first focal point (140) and the sample holder at the second focal point (150).

4. A measurement device according to claim 3, wherein the input/output port (160, 170) includes an antenna (170) for directing the electromagnetic energy onto the sample holder via the reflective surface (120) and for receiving reflected electromagnetic energy from the sample holder via the reflective surface (120).

5. A measurement device according to claim 2, wherein two reflective surfaces (220, 225; 440, 445; 540, 545) are provided, each reflective surface (220, 225; 440, 445; 540, 545) forming the portion of an ellipse (230, 235) and having respective first and second focal points (240, 245, 250, 255; 450, 455; 520, 525, 530, 535), and wherein the second focal point (250; 530) of one ellipse (230) is coincident with the second focal point (255; 535) of the other ellipse (235), the sample holder being located at the coincident focal point (250, 255; 530, 535) with the input/output ports (260, 265; 550, 555) being located at respective ones of the first focal points (240, 245; 520, 525).

6. A measurement device according to claim 5, wherein each input/output port (260, 265) includes a respective antenna (270, 275) for directing the electromagnetic energy onto the sample holder via the reflective surface (220, 225) and for receiving reflected electromagnetic energy from the sample holder via the reflective surface (220, 225).

7. A measurement device according to claim 5 or 6, wherein each input/output port (260, 265) includes a respective antenna (270, 275) for directing the electromagnetic energy onto the sample holder via the reflective surface (220, 225) and for receiving transmitted electromagnetic energy from the sample holder via the reflective surface (220, 225).

8. A measurement device according to any one of claims 5 to 7, wherein at least one of the input/output ports (260, 265, 270, 275) directs electromagnetic energy into the measurement chamber (210; 430, 510).

9. A measurement device according to any one of claims 5 to 8, wherein both input/output ports (260, 265, 270, 275) direct electromagnetic energy into the measurement chamber (210; 430, 510).

10. A measurement device according to claim 9, wherein each input/output ports (260, 265, 270, 275) directs electromagnetic energy into the measurement chamber (210; 430, 510) sequentially.

11. A measurement device according to claim 9, wherein each input/output ports (260, 265, 270, 275) directs electromagnetic energy into the measurement chamber (210; 430, 510) simultaneously.

12. A measurement device according to claim 10 or 11, wherein each input/output ports (260, 265, 270, 275) directs electromagnetic energy at different frequencies.

13. A measurement device according to any one of claims 8 to 12, wherein at least one of the input/output ports (260, 265, 270, 275) receives reflected electromagnetic energy from the sample holder.

14. A measurement device according to any one of claims 8 to 13, wherein at least one of the input/output ports (260, 265, 270, 275) receives transmitted electromagnetic energy from the sample holder.

15. A measurement device according to any one of the preceding claims, wherein each input/output port (550, 555) comprises a waveguide (460).

16. A measurement device according to any one of the preceding claims, wherein walls (180; 280, 285; 480) of the measurement chamber (110; 210; 410) are covered with electromagnetic absorbing material to prevent reflected electromagnetic radiation from these walls (180; 280, 285; 480) interfering with electromagnetic radiation reflected and/or transmitted from the sample.

## Patentansprüche

1. Messgerät (100; 200; 400; 500) zum Messen elektromagnetischer Kenngrößen einer Probe von mindestens einer Submillimetergröße unter Verwendung elektromagnetischer Strahlung, die eine Frequenz in einer der Millimeter- oder Submillimeterwellenfrequenzen aufweist, wobei das Messgerät umfasst:
eine Messkammer (110; 210; 430; 510);
mindestens einen Eingangs/Ausgangsanschluss (160, 170; 260, 265, 270, 275; 550, 555), der in der Messkammer (110; 210; 430; 510) für das Zuführen elektromagnetischer Strahlung in die Messkammer (110; 210; 430; 510) vorgesehen ist;
mindestens eine Reflexionsfläche (120; 220, 225; 440, 445; 540, 545), die in der Messkammer (110; 210; 430; 510) vorgesehen ist, um die zugeführte elektromagnetische Strahlung auf die Probe auszurichten und um mindestens die elektromagnetische Strahlung, die von der Probe reflektiert wurde, auszurichten, wobei jede Reflexionsfläche (120; 220, 225; 440, 445; 540, 545) ein zum Teil konisches Gebilde (130; 230, 235; 540, 545) umfasst, das mindestens zwei Brennpunkte (140, 150; 240, 245, 250, 255; 450, 455; 520, 525, 530, 535) aufweist, wobei jeder Eingangs/Ausgangsanschluss (160, 170; 260, 265, 270, 275; 550, 555) und die Probe an einem der Brennpunkte (140, 150; 240, 245, 250, 255; 450, 455; 520, 525, 530, 535) angeordnet sind; und
ein Steuergerät zum Steuern der zugeführten elektromagnetischen Strahlung und zum Messen der elektromagnetischen Strahlung, die mindestens von der Probe reflektiert wird;
**dadurch gekennzeichnet, dass** das Messgerät ferner einen Probenhalter zum Halten der Probe aufweist, wobei der Probenhalter in der Messkammer (110; 210; 430; 510) befestigt ist, und dadurch, dass die Messkammer (110; 210; 430; 510) im Wesentlichen zweidimensional ist.

2. Messgerät nach Anspruch 1, wobei das zum Teil konische Gebilde eine Ellipse (130; 230, 235) umfasst und die Reflexionsfläche (120; 220, 225; 440, 445; 540, 545) einen Anteil der Ellipse (130; 230, 235) umfasst.

3. Messgerät nach Anspruch 2, wobei eine einzige Reflexionsfläche (120) vorgesehen ist, die den Anteil einer Ellipse (130) bildet, wobei die Reflexionsfläche (120) einen ersten und zweiten Brennpunkt (140, 150) aufweist, wobei ein Eingangs/Ausgangsanschluss (160, 170) an dem ersten Brennpunkt (140) und der Probenhalter an dem zweiten Brennpunkt (150) angeordnet ist.

4. Messgerät nach Anspruch 3, wobei der Eingangs/Ausgangsanschluss (160, 170) eine Antenne (170) aufweist, um die elektromagnetische Energie über die Reflexionsfläche (120) auf den Probenhalter zu richten und um die vom Probenhalter reflektierte Energie über die Reflexionsfläche (120) zu empfangen.

5. Messgerät nach Anspruch 2, wobei zwei Reflexionsflächen (220, 225; 440, 445; 540, 545) vorgesehen sind, wobei jede Reflexionsfläche (220, 225; 440, 445; 540, 545) den Anteil einer Ellipse (230, 235) ausbildet und entsprechende erste und zweite Brennpunkte (240, 245, 250, 255; 450, 455; 520, 525, 530, 535) aufweist und wobei der zweite Brennpunkt (250; 530) der einen Ellipse (230) mit dem zweiten Brennpunkt (255; 535) der anderen Ellipse (235) übereinstimmt, wobei der Probenhalter an dem übereinstimmenden Brennpunkt (250, 255; 530, 535) angeordnet ist, wobei die Eingangs/Ausgangsanschlüsse (260, 265; 550, 555) an den entsprechenden von den ersten Brennpunkten (240, 245; 520, 525) angeordnet sind.

6. Messgerät nach Anspruch 5, wobei jeder Eingangs/Ausgangsanschluss (260, 265) eine entsprechende Antenne (270, 275) aufweist, um die elektromagnetische Energie über die Reflexionsfläche (220, 225) auf den Probenhalter auszurichten und um die vom Probenhalter reflektierte Energie über die Reflexionsfläche (220, 225) zu empfangen.

7. Messgerät nach Anspruch 5 oder 6, wobei jeder Eingangs/Ausgangsanschluss (260, 265) eine entsprechende Antenne (270, 275) aufweist, um die elektromagnetische Energie über die Reflexionsfläche (220, 225) auf den Probenhalter auszurichten und um die vom Probenhalter durchgelassene Energie über die Reflexionsfläche (220, 225) zu empfangen.

8. Messgerät nach einem der Ansprüche 5 bis 7, wobei mindestens einer der Eingangs/Ausgangsanschlüsse (260, 265, 270, 275) elektromagnetische Energie in die Messkammer (210; 430, 510) einleitet.

9. Messgerät nach einem der Ansprüche 5 bis 8, wobei beide Eingangs/Ausgangsanschlüsse (260, 265, 270, 275) elektromagnetische Energie in die Messkammer (210; 430, 510) einleiten.

10. Messgerät nach Anspruch 9, wobei jeder Eingangs/Ausgangsanschluss (260, 265, 270, 275) elektromagnetische Energie nacheinander in die Messkammer (210; 430, 510) einleitet.

11. Messgerät nach Anspruch 9, wobei jeder Eingangs/Ausgangsanschluss (260, 265, 270, 275) elektromagnetische Energie gleichzeitig in die Messkammer (210; 430, 510) einleitet.

12. Messgerät nach Anspruch 10 oder 11, wobei jeder Eingangs/Ausgangsanschluss (260, 265, 270, 275) elektromagnetische Energie bei unterschiedlichen Frequenzen einleitet.

13. Messgerät nach einem der Ansprüche 8 bis 12, wobei mindestens einer der Eingangs/Ausgangsanschlüsse (260, 265, 270, 275) elektromagnetische Energie empfängt, die von dem Probenhalter reflektiert wurde.

14. Messgerät nach einem der Ansprüche 8 bis 13, wobei mindestens einer der Eingangs/Ausgangsanschlüsse (260, 265, 270, 275) elektromagnetische Energie empfängt, die von dem Probenhalter durchgelassen wurde.

15. Messgerät nach einem der vorhergehenden Ansprüche, wobei jeder Eingangs/Ausgangsanschluss (550, 555) einen Wellenleiter (460) aufweist.

16. Messgerät nach einem der vorhergehenden Ansprüche, wobei Wände (180; 280, 285; 480) der Messkammer (110; 210; 410) mit elektromagnetisch absorbierendem Material bedeckt sind, um zu verhindern, dass von diesen Wänden (180; 280, 285; 480) reflektierte elektromagnetische Strahlung die elektromagnetische Strahlung beeinträchtigt, die von der Probe reflektiert und/oder durchgelassen wurde.

## Revendications

1. Dispositif de mesure (100 ; 200 ; 400 ; 500) pour mesurer des caractéristiques électromagnétiques d'un échantillon d'au moins une taille submillimétrique en utilisant un rayonnement électromagnétique ayant une fréquence dans une des fréquences d'ondes millimétriques et submillimétriques, le dispositif de mesure comprenant :
une chambre de mesure (110 ; 210 ; 430 : 510) ;
au moins un port d'entrée / de sortie (160, 170 ; 260, 265, 270, 275 ; 550, 555) prévu dans la chambre de mesure (110 ; 210 ; 430 : 510) pour introduire un rayonnement électromagnétique dans la chambre de mesure (110 ; 210 ; 430 : 510) ;
au moins une surface réfléchissante (120 ; 220, 225 ; 440, 445 ; 540 ; 545) prévue à l'intérieur de la chambre de mesure (110 ; 210 ; 430 : 510) pour diriger le rayonnement électromagnétique introduit vers l'échantillon et pour diriger au moins le rayonnement électromagnétique réfléchi à partir de l'échantillon, chaque surface réfléchissante (120 ; 220, 225 ; 440, 445 ; 540 ; 545) comprenant une forme partiellement conique (130 ; 230, 235 ; 540, 545) ayant au moins deux foyers (140, 150 ; 240, 245, 250, 255 ; 450, 455 ; 520, 525, 530, 535), chaque port d'entrée / de sortie (160, 170 ; 260, 265, 270, 275 ; 550, 555) et l'échantillon est situé à un des foyers (140, 150 ; 240, 245, 250, 255 ; 450, 455 ; 520, 525, 530, 535) ; et
un contrôleur pour contrôler le rayonnement électromagnétique introduit et pour mesurer le rayonnement électromagnétique qui est au moins réfléchi à partir de l'échantillon ;
**caractérisé en ce que** le dispositif de mesure comprend en outre un porte - échantillon pour porter l'échantillon, le porte - échantillon étant monté à l'intérieur de la chambre de mesure (110 ; 210 ; 430 : 510), et **en ce que** la chambre de mesure (110 ; 210 ; 430 : 510) est pratiquement bidimensionelle.

2. Dispositif de mesure selon la revendication 1, dans lequel la forme partiellement conique comprend une ellipse (130 ; 230, 235) et la surface réfléchissante (120 ; 220, 225 ; 440, 445 ; 540 ; 545) comprend une partie de l'ellipse (130 ; 230, 235).

3. Dispositif de mesure selon la revendication 2, dans lequel une seule surface réfléchissante (120) est prévue, laquelle forme la partie d'une ellipse (130), la surface réfléchissante (120) ayant des premier et deuxième foyers (140, 150) avec un port d'entrée / de sortie (160, 170) situé au premier foyer (140) et le porte - échantillon au deuxième foyer (150).

4. Dispositif de mesure selon la revendication 3, dans lequel le port d'entrée / de sortie (160, 170) comprend une antenne (170) pour diriger l'énergie électromagnétique sur le porte - échantillon par l'intermédiaire de la surface réfléchissante (120) et pour recevoir de l'énergie électromagnétique réfléchie à partir du porte - échantillon par l'intermédiaire de la surface réfléchissante (120).

5. Dispositif de mesure selon la revendication 2, dans lequel deux surfaces réfléchissantes (220, 225 ; 440, 445 ; 540 ; 545) sont prévues, chaque surface réfléchissante (220, 225 ; 440, 445 ; 540 ; 545) formant la partie d'une ellipse (230, 235) et ayant des premier et deuxième foyers respectifs (240, 245, 250, 255 ; 450, 455 ; 520, 525, 530, 535) et dans lequel le deuxième foyer (250 ; 530) d'une ellipse (230) est coïncident avec le deuxième foyer (255 ; 535) de l'autre ellipse (235), le porte - échantillon étant situé au foyer coïncident (250, 255 ; 530, 535), les ports d'entrée / de sortie (260, 265 ; 550, 555) étant situés à des foyers respectifs des premiers foyers (240, 245 ; 520, 525).

6. Dispositif de mesure selon la revendication 5, dans lequel chaque port d'entrée / de sortie (260, 265) comprend une antenne respective (270, 275) pour diriger l'énergie électromagnétique sur le porte - échantillon par l'intermédiaire de la surface réfléchissante (220, 225) et pour recevoir de l'énergie électromagnétique réfléchie à partir du porte - échantillon par l'intermédiaire de la surface réfléchissante (220, 225).

7. Dispositif de mesure selon la revendication 5 ou 6, dans lequel chaque port d'entrée / de sortie (260, 265) comprend une antenne respective (270, 275) pour diriger l'énergie électromagnétique sur le porte - échantillon par l'intermédiaire de la surface réfléchissante (220, 225) et pour recevoir de l'énergie électromagnétique transmise à partir du porte - échantillon par l'intermédiaire de la surface réfléchissante (220, 225).

8. Dispositif de mesure selon l'une quelconque des revendications 5 à 7, dans lequel au moins un des ports d'entrée / de sortie (260, 265, 270, 275) dirige de l'énergie électromagnétique dans la chambre de mesure (210 ; 430, 510).

9. Dispositif de mesure selon l'une quelconque des revendications 5 à 8, dans lequel les deux ports d'entrée / de sortie (260, 265, 270, 275) dirigent de l'énergie électromagnétique dans la chambre de mesure (210 ; 430, 510).

10. Dispositif de mesure selon la revendication 9, dans lequel chaque port d'entrée / de sortie (260, 265, 270, 275) dirige de l'énergie électromagnétique dans la chambre de mesure (210 ; 430, 510) séquentiellement.

11. Dispositif de mesure selon la revendication 9, dans lequel chaque port d'entrée / de sortie (260, 265, 270, 275) dirige de l'énergie électromagnétique dans la chambre de mesure (210 ; 430, 510) simultanément.

12. Dispositif de mesure selon la revendication 10 ou 11, dans lequel chaque port d'entrée / de sortie (260, 265, 270, 275) dirige de l'énergie électromagnétique à des fréquences différentes.

13. Dispositif de mesure selon l'une quelconque des revendications 8 à 12, dans lequel au moins un des ports d'entrée / de sortie (260, 265, 270, 275) reçoit de l'énergie électromagnétique réfléchie à partir du porte - échantillon.

14. Dispositif de mesure selon l'une quelconque des revendications 8 à 13, dans lequel au moins un des ports d'entrée / de sortie (260, 265, 270, 275) reçoit de l'énergie électromagnétique transmise à partir du porte - échantillon.

15. Dispositif de mesure selon l'une quelconque des revendications précédentes, dans lequel chaque port d'entrée / de sortie (550, 555) comprend un guide d'ondes (460).

16. Dispositif de mesure selon l'une quelconque des revendications précédentes, dans lequel des parois (180 ; 280, 285 ; 480) de la chambre de mesure (110 ; 210 ; 410) sont couvertes de matériau absorbeur d'ondes électromagnétiques pour empêcher le rayonnement électromagnétique réfléchi à partir de ces parois (180 ; 280, 285 ; 480) d'interférer avec le rayonnement électromagnétique réfléchi et / ou transmis à partir de l'échantillon.
